(19) **Europäisches Patentamt**
**European Patent Office**
**Office européen des brevets**

(11) **EP 4 148 408 A1**

(12) **EUROPEAN PATENT APPLICATION**
published in accordance with Art. 153(4) EPC

(43) Date of publication:
**15.03.2023 Bulletin 2023/11**

(21) Application number: **21800766.4**

(22) Date of filing: **19.03.2021**

(51) International Patent Classification (IPC):
**G01M 7/02** *(2006.01)* **G06F 30/15** *(2020.01)*
**G06F 30/20** *(2020.01)*

(52) Cooperative Patent Classification (CPC):
**G01M 7/02; G06F 30/10; G06F 30/15; G06F 30/20;**
Y02T 10/40; Y02T 90/00

(86) International application number:
**PCT/JP2021/011351**

(87) International publication number:
**WO 2021/225037 (11.11.2021 Gazette 2021/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.05.2020 JP 2020081676**

(71) Applicant: **JFE Steel Corporation**
**Tokyo 100-0011 (JP)**

(72) Inventor: **SAITO, Takanobu**
**Tokyo 100-0011 (JP)**

(74) Representative: **Grünecker Patent- und Rechtsanwälte**
**PartG mbB**
**Leopoldstraße 4**
**80802 München (DE)**

(54) **AUTOMOTIVE-BODY-ADHESION-POSITION OPTIMIZATION-ANALYSIS METHOD AND DEVICE**

(57) An optimization analysis method of an adhesive position in an automotive body according to the present invention is a method for obtaining an optimized position where adhesive bonding will be performed by using a structural adhesive in conjunction with welding, by using an automotive body model 31 obtained by presetting a welding point 33 where a plurality of parts will be welded as a parts assembly, and the optimization analysis method includes a step (S1) of performing frequency response analysis to obtain a deformation form in a vibration mode generated in the automotive body model 31, a step (S3) of determining a load condition to be imposed on the automotive body model 31, the load condition corresponding to the obtained deformation form in the vibration mode, a step (S5) of setting an adhesive candidate 53 in a position serving as a candidate for adhesive bonding, a step (S7) of setting an optimization analysis condition that is used to perform optimization analysis on the adhesive candidate 53, and a step (S9) of obtaining, as an optimized adhesive portion 55, the adhesive candidate 53 that satisfies the optimization analysis condition under the load condition that has been determined in the step (S3).

FIG.7

START

FREQUENCY RESPONSE ANALYSIS STEP — S1

LOAD CONDITION DETERMINATION STEP — S3

OPTIMIZATION ANALYSIS MODEL GENERATION STEP — S5

OPTIMIZATION ANALYSIS CONDITION SETTING STEP — S7

OPTIMIZATION ANALYSIS STEP — S9

END

**Description**

Field

The present invention relates to an optimization analysis method and an apparatus of an adhesive position in an automotive body of an automobile, and in particular, an optimization analysis method and an apparatus of an adhesive position in an automotive body for obtaining an optimized adhesive position of a structural adhesive in order to improve dynamic stiffness pertaining to vibration characteristics of an automotive body in a case where welding and the structural adhesive are used in conjunction with each other.

Background

Examples of an index of stiffness of a structural body include static stiffness and dynamic stiffness. Static stiffness is improved if a spring constant increases, regardless of the mass of the structural body, according to the Hooke's law. In contrast, dynamic stiffness has a relationship with vibration characteristics of a structural body, in a case where a shape of the structural body periodically changes as a result of an input of a periodic load from a vibration point. For example, dynamic stiffness in vibration of a single-degree of freedom system is evaluated by using a frequency $\omega$ that is expressed by $\omega) = (K/M)^{0.5}$ by using stiffness K of a structural body (in the case of vibration of a multi-degree of freedom system, this corresponds to a stiffness matrix) and the mass M of the structural body, and if the frequency $\omega$ increases as a result of an increase in the stiffness K, the dynamic stiffness is improved.
However, in some cases, even if the stiffness K of the structural body increases, if the mass M increases, the frequency $\omega$ does not increase, and in such cases, the dynamic stiffness is not improved. Therefore, in order to improve the dynamic stiffness, it is effective that the structural body is reduced in weight (the mass M is reduced), and the stiffness K is improved. However, in general, if the mass M increases, the stiffness K also increases. Therefore, an increase in the stiffness K conflicts with weight reduction, and it is very difficult to simultaneously achieve both. Therefore, trial-and-error measures have often been taken to optimize vibration characteristics of a structural body and improve dynamic stiffness.
In recent years, in particular, in the automotive industry, weight reduction of an automotive body has been advanced due to environmental issues, and analysis using computer aided engineering (hereinafter referred to as "CAE analysis") has been an essential technology for designing the automotive body. It is known that in this CAE analysis, improvements in stiffness or weight reduction are achieved by using an optimization technology such as mathematical optimization, sheet thickness optimization, shape optimization, or topology optimization, and the optimization technology is often used, for example, in structural optimization of casting of an engine block or the like.
Among optimization technologies, attention has been paid, in particular, to topology optimization. Topology optimization is a method for providing a design space having a certain size in a structural body, incorporating a three-dimensional element into the design space, leaving a minimum required portion that satisfies given conditions of the three-dimensional element, and obtaining an optimal shape. Therefore, in topology optimization, a method for directly imposing restraints on the three-dimensional element included in the design space and directly imposing a load is used. As a technology relating to such topology optimization, a method for topology optimization of a component of a complicated structural body is disclosed in Patent Literature 1.

Citation List

Patent Literature

Patent Literature 1: JP 2010-250818 A

Summary

Technical Problem

A structural body such as an automotive body is formed by performing welding or the like to bond and join a plurality of parts as a parts assembly. It is known that, in order to improve stiffness of the automotive body, it is effective to apply a structural adhesive and perform adhesive bonding in conjunction with welding for bonding and joining the parts to each other. However, in order to adhesively bond all of the flange portions that are to bond and join the parts of the automotive body to each other, the structural adhesive needs to be applied to have a length of 100 m or more, it takes time, and this causes a problem in manufacturing efficiency and a manufacturing cost.
In view of this, in order to improve stiffness of an automotive body, it is conceivable that the optimization technology disclosed in Patent Literature 1 is applied to obtain an optimized position where adhesive bonding will be performed by using a structural adhesive in conjunction with welding. In addition, in order to improve dynamic stiffness of an automotive body by using an optimization technology, an adhesive position needs to be optimized against vibration of the automotive body. However, in the optimization technology disclosed in Patent Literature 1, a vibrating automotive body is not a target of optimization, and the optimization technology disclosed in Patent Literature 1 is a design means in a static state. Therefore, in a case where welding and adhesive bonding using a structural adhesive are used in conjunction with each other, by using, as a target, an automotive body that is vibrating as a result of inputting a periodic load to the automotive body, a position where the structural adhesive will be applied and adhesive bonding will be performed has failed to be directly optimized.

The present invention has been made in view of the problem described above, and it is an object of the present invention to provide an optimization analysis method and an apparatus of an adhesive position in an automotive body for obtaining an optimized position where a parts assembly will be adhesively bonded by using a structural adhesive in conjunction with welding for bonding and joining the parts assembly in the automotive body in order to improve dynamic stiffness pertaining to vibration characteristics of the automotive body.

Solution to Problem

An optimization analysis method of an adhesive position in an automotive body according to a first aspect of the present invention for obtaining an optimized position where a parts assembly is adhesively bonded by using a structural adhesive in conjunction with welding, the method being executed by a computer using an automotive body model including a plurality of parts including a two-dimensional element and/or a three-dimensional element wherein a welding portion to which the plurality of parts are welded as the parts assembly is preset, includes: a frequency response analysis step of imposing a predetermined vibration condition on the automotive body model, performing frequency response analysis, and obtaining a vibration mode generated in the automotive body model, and a deformation form in the vibration mode; a load condition determination step of determining a load condition to be imposed on the automotive body model, the load condition corresponding to the deformation form in the obtained vibration mode; an optimization analysis model generation step of generating an optimization analysis model obtained by setting an adhesive candidate in the automotive body model, the adhesive candidate serving as a candidate for adhesive bonding of the parts assembly; an optimization analysis condition setting step of setting an optimization analysis condition used to perform optimization analysis by using, as an optimization target, the adhesive candidate set in the generated optimization analysis model; and an optimization analysis step of imposing the load condition determined in the load condition determination step on the optimization analysis model, performing the optimization analysis, and obtaining the adhesive candidate that satisfies the optimization analysis condition, as an optimized adhesive portion where each parts assembly is bonded and joined.

An optimization analysis method of an adhesive position in an automotive body according to a second aspect of the present invention for obtaining an optimized position where a parts assembly is adhesively bonded by using a structural adhesive in conjunction with welding, the method being executed by a computer using an automotive body model including a plurality of parts including a two-dimensional element and/or a three-dimensional element wherein a welding portion to which the plurality of parts are welded as the parts assembly is preset, includes: an eigenvalue analysis step of performing eigenvalue analysis on the automotive body model, and obtaining a vibration mode generated in the automotive body model, and a deformation form in the vibration mode; a load condition determination step of determining a load condition to be imposed on the automotive body model, the load condition corresponding to the deformation form in the obtained vibration mode; an optimization analysis model generation step of generating an optimization analysis model obtained by setting an adhesive candidate in the automotive body model, the adhesive candidate serving as a candidate for adhesive bonding of the parts assembly; an optimization analysis condition setting step of setting an optimization analysis condition used to perform optimization analysis by using, as an optimization target, the adhesive candidate set in the generated optimization analysis model; and an optimization analysis step of imposing the load condition determined in the load condition determination step on the optimization analysis model, performing the optimization analysis, and obtaining the adhesive candidate that satisfies the optimization analysis condition, as an optimized adhesive portion where each parts assembly is bonded and joined.

An optimization analysis apparatus of an adhesive position in an automotive body according to a first aspect of the present invention for obtaining an optimized position where a parts assembly is adhesively bonded by using a structural adhesive in conjunction with welding, by using an automotive body model including a plurality of parts including a two-dimensional element and/or a three-dimensional element wherein a welding portion to which the plurality of parts are welded as the parts assembly is preset, includes: a frequency response analysis unit configured to impose a predetermined vibration condition on the automotive body model, perform frequency response analysis, and obtain a vibration mode generated in the automotive body model, and a deformation form in the vibration mode; a load condition determination unit configured to determine a load condition to be imposed on the automotive body model, the load condition corresponding to the deformation form in the obtained vibration mode; an optimization analysis model generation unit configured to generate an optimization analysis model obtained by setting an adhesive candidate in the automotive body model, the adhesive candidate serving as a candidate for adhesive bonding of the parts assembly; an optimization analysis condition setting unit configured to set an optimization analysis condition used to perform optimization analysis by using, as an optimization target, the adhesive candidate set in the generated optimization analysis model; and an optimization analysis unit configured to impose the load condition determined by the load condition determination unit on the optimization analysis model in which the optimization analysis condition has been set, perform the optimization analysis, and obtain the adhesive candidate that satisfies the optimization analysis condition, as an optimized adhesive portion where each parts assembly is adhesively bonded.

An optimization analysis apparatus of an adhesive position in an automotive body according to a second aspect of the present invention for obtaining an optimized position where a parts assembly is adhesively bonded by using a structural adhesive in conjunction with welding, by using an automotive body model including a plurality of parts including a two-dimensional element and/or a three-dimensional element wherein a welding portion to which the plurality of parts are welded as the parts assembly is preset, includes: an eigenvalue analysis unit configured to perform eigenvalue analysis on the automotive body model, and obtain a vibration mode generated in the automotive body model, and a deformation form in the vibration mode; a load condition determination unit configured to determine a load condition to be imposed on the automotive body model, the load condition corresponding to the deformation form in the obtained vibration mode; an optimization analysis model generation unit configured to generate an optimization analysis model obtained by setting an adhesive candidate in the automotive body model, the adhesive candidate serving as a candidate for adhesive bonding of the parts assembly; an optimization analysis condition setting unit configured to set an optimization analysis condition used to perform optimization analysis by using, as an optimization target, the adhesive candidate set in the generated optimization analysis model; and an optimization analysis unit configured to impose the load condition determined by the load condition determination unit on the optimization analysis model in which the optimization analysis condition has been set, perform the optimization analysis, and obtain the adhesive candidate that satisfies the optimization analysis condition, as an optimized adhesive portion where each parts assembly is adhesively bonded.

Advantageous Effects of Invention

According to the present invention, an optimized position where a parts assembly will be adhesively bonded by using a structural adhesive in conjunction with a welding portion can be obtained in order to improve dynamic stiffness pertaining to vibration characteristics of an automotive body model.

Brief Description of Drawings

FIG. 1 is a block diagram of an optimization analysis apparatus of an adhesive position in an automotive body according to an embodiment of the present invention.

FIG. 2 is a side view and a perspective view illustrating a welding portion that has been preset in an automotive body model serving as an analysis target according to the present embodiment, and an additional adhesive candidate serving as a candidate for optimization in the automotive body model ((a): a preset adhesive portion; (b): an additional adhesive candidate).

FIG. 3 is a perspective view illustrating a state of deformation of an automotive body model in a vibration mode obtained in frequency response analysis according to the embodiment of the present invention ((a) a torsional mode, (b) a bending mode)).

FIG. 4 is a diagram illustrating types of load conditions that are selected as a load condition that corresponds to a deformation form in a vibration mode obtained in frequency response analysis according to the embodiment of the present invention.

FIG. 5 is a perspective view illustrating a load condition of an automotive body model that corresponds to a deformation form in a vibration mode obtained in frequency response analysis, and deformation of the automotive body model on which the load condition has been imposed according to the embodiment of the present invention ((a) a load condition, (b) a deformation state of the automotive body model).

FIG. 6 is an explanatory diagram explaining generation of an adhesive candidate serving as a target of optimization analysis, and selection of an optimized adhesive portion in optimization analysis according to the present embodiment ((a): an welding portion preset in a parts assembly; (b): generation of an adhesive candidate; and (c): selection of an optimized adhesive portion).

FIG. 7 is a flowchart illustrating a flow of processing of an optimization analysis method of an adhesive position in an automotive body according to the embodiment of the present invention.

FIG. 8 is a block diagram of an optimization analysis apparatus of an adhesive position in an automotive body in another aspect of the embodiment of the present invention.

FIG. 9 is a flowchart illustrating a flow of processing of an optimization analysis method of an adhesive position in an automotive body in the other aspect of the embodiment of the present invention.

FIG. 10 is a perspective view illustrating a state of deformation of an automotive body model in a vibration mode obtained in eigenvalue analysis in the other aspect of the embodiment of the present invention ((a) a torsional mode, (b) a bending mode)).

FIG. 11 is a side view and a perspective view illustrating an optimized adhesive portion that has been optimized under a load condition that corresponds to deformation in a torsional mode obtained in frequency response analysis ((a) an application length of 79 m, (b) an application length of 54 m).

FIG. 12 is a diagram illustrating an optimized adhesive portion that has been optimized under a load condition that corresponds to a deformation form in a torsional mode obtained in frequency response analysis ((a) an application length of 28 m, (b) an application length of 14 m) .

FIG. 13 is a diagram illustrating an optimized adhesive portion that has been optimized under a load condition that corresponds to a deformation form in a bending mode obtained in frequency response analysis ((a) application length: 79 m, (b) application length: 54 m).

FIG. 14 is a diagram illustrating an optimized adhesive portion that has been optimized under a load condition that corresponds to a deformation form in a bending mode obtained in frequency response analysis ((a) application length: 28 m, (b) application length: 14 m).

FIG. 15 is a graph illustrating a frequency response of an optimization analysis model that has been optimized under a load condition that corresponds to a deformation form in a torsional mode obtained in frequency response analysis and in which an optimized adhesive portion has been set.

FIG. 16 is a graph illustrating a frequency response of an optimization analysis model that has been optimized under a load condition that corresponds to a deformation form in a bending mode obtained in frequency response analysis and in which an optimized adhesive portion has been set.

FIG. 17 is a graph illustrating a relationship between an application length and a frequency change rate of an optimized adhesive portion that has been optimized under a load condition that corresponds to a deformation form in a torsional mode obtained in frequency response analysis.

FIG. 18 is a graph illustrating a relationship between an application length and a frequency change rate of an optimized adhesive portion that has been optimized under a load condition that corresponds to a deformation form in a bending mode obtained in frequency response analysis.

FIG. 19 is a graph illustrating a relationship between an application length and a frequency change rate of an optimized adhesive portion that has been optimized under a load condition that corresponds to a deformation form in a torsional mode obtained in eigenvalue analysis.

FIG. 20 is a graph illustrating a relationship between an application length and a frequency change rate of an optimized adhesive portion that has been optimized under a load condition that corresponds to a deformation form in a bending mode obtained in eigenvalue analysis.

Description of Embodiments

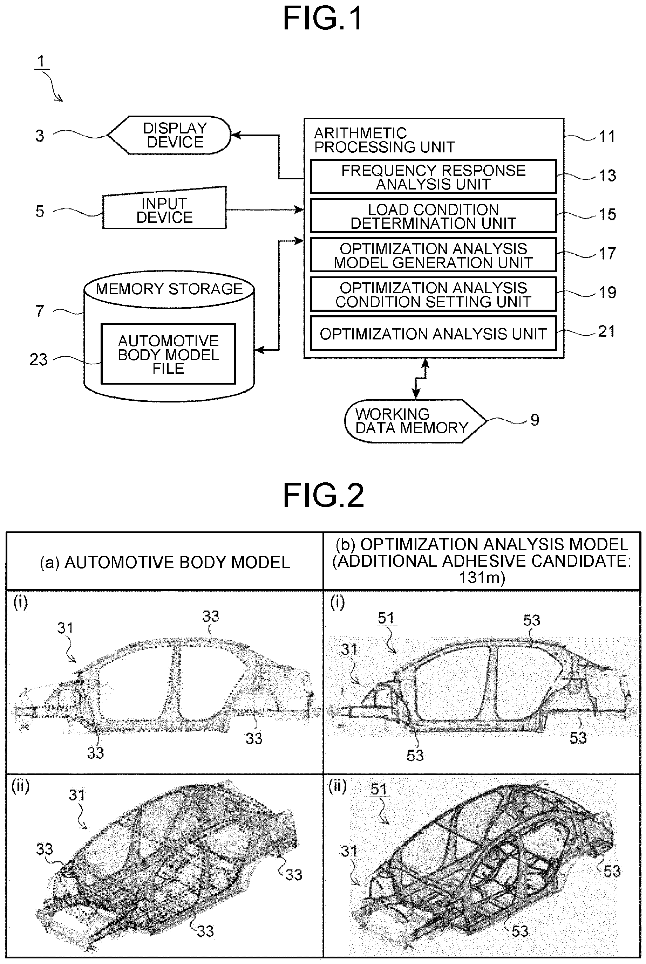

An optimization analysis method and an apparatus of an adhesive position in an automotive body according to an embodiment of the present invention are described below with reference to FIGS. 1 to 10. Note that prior to the description of the optimization analysis method and the apparatus of the adhesive position in the automotive body, an automotive body model serving as a target in the present invention is described.

<Automotive Body Model>

An automotive body model serving as a target in the present invention includes a plurality of parts such as body frame parts or chassis parts. The respective parts of the automotive body model have been modeled by using a two-dimensional element and/or a three-dimensional element, and a welding portion where the respective parts will be welded as a parts assembly has been preset.

An example of an automotive body model 31 is illustrated in FIG. 2(a). In the automotive body model 31, a welding point 33 on which spot welding has been performed has been preset as a welding portion where each parts assembly will be welded.

The present invention handles a deformation behavior, a vibration behavior, or the like that is generated by a load acting on the automotive body model 31, and therefore respective parts in the automotive body model 31 have been modeled as an elastic body or a viscoelastic body, or an elastoplastic body. A material property or element information of each of the parts that are included in the automotive body model 31, and information relating to the welding point 33 (FIG. 2(a)) or the like in each of the parts assemblies are stored in an automotive body model file 23 (see FIG.

1) described later.

Note that the welding portion of the automotive body model according to the present invention is not limited to point joining such as the welding point 33 illustrated in FIG. 2(a), and includes a portion on which continuous joining has been performed by performing elastic arc welding or laser beam welding.

<Optimization Analysis Apparatus of Adhesive Position in Automotive Body>

A configuration of an optimization analysis apparatus of an adhesive position in an automotive body (hereinafter simply referred to as an "optimization analysis apparatus") according to the embodiment of the present invention is described below.

An optimization analysis apparatus 1 according to the present embodiment obtains an optimized position to be added where adhesive bonding will be performed by using a structural adhesive in conjunction with welding for bonding and joining a plurality of parts that are included in the automotive body model 31 (see FIG. 2(a)) as a parts assembly. The optimization analysis apparatus 1 includes a personal computer (PC) or the like, as illustrated in FIG. 1, and includes a display device 3, an input device 5, a memory storage 7, a working data memory 9, and an arithmetic processing unit 11. The display device 3, the input device 5, the memory storage 7, and the working data memory 9 are connected to the arithmetic processing unit 11, and respective functions are performed according to a command from the arithmetic processing unit 11.

In an example of obtaining an optimized position where a parts assembly will be adhesively bonded by using a structural adhesive in conjunction with welding, by using the automotive body model 31 in which the welding point 33 where a plurality of parts will be welded as the parts assembly has been preset, as illustrated in FIG. 2(a), functions of respective components of the optimization analysis apparatus 1 according to the present embodiment are described below.

<<Display Device>>

The display device 3 is used to display an analysis result or the like, and includes an LCD monitor or the like.

<<Input Device>>

The input device 5 is used, for example, to provide an instruction to display the automotive body model file 23 or for an operator to input conditions, and includes a keyboard, a mouse, or the like.

<<Memory Storage>>

The memory storage 7 is used, for example, to store various files such as the automotive body model file 23, and includes a hard disk or the like.

<<Working Data Memory>>

The working data memory 9 is used to transitorily store data to be used by the arithmetic processing unit 11 or perform an arithmetic operation, and includes a random access memory (RAM) or the like.

<<Arithmetic Processing Unit>>

The arithmetic processing unit 11 includes a frequency response analysis unit 13, a load condition determination unit 15, an optimization analysis model generation unit 17, an optimization analysis condition setting unit 19, and an optimization analysis unit 21, as illustrated in FIG. 1, and includes a central processing unit (CPU) of a PC or the like. The CPU executes a predetermined program, and therefore these respective units function. Functions of the respective units of the arithmetic processing unit 11 are described below.

(Frequency Response Analysis Unit)

The frequency response analysis unit 13 imposes a predetermined vibration condition on the automotive body model 31, performs frequency response analysis, and obtains a vibration mode generated in the automotive body model 31, and a deformation form in the vibration mode.

Frequency response analysis is an analysis technique for obtaining a vibration mode indicating a response such as displacement of a structural body at a time when a vibration condition in which a stationary sign wave load is input has been imposed on the structural body, and a deformation form in the vibration mode.

In an example of frequency response analysis according to the present embodiment, a vibration condition in which a sign wave load is input in an automotive body upward direction to left-hand and right-hand rear suspension mounted portions of the automotive body model 31 has been imposed.

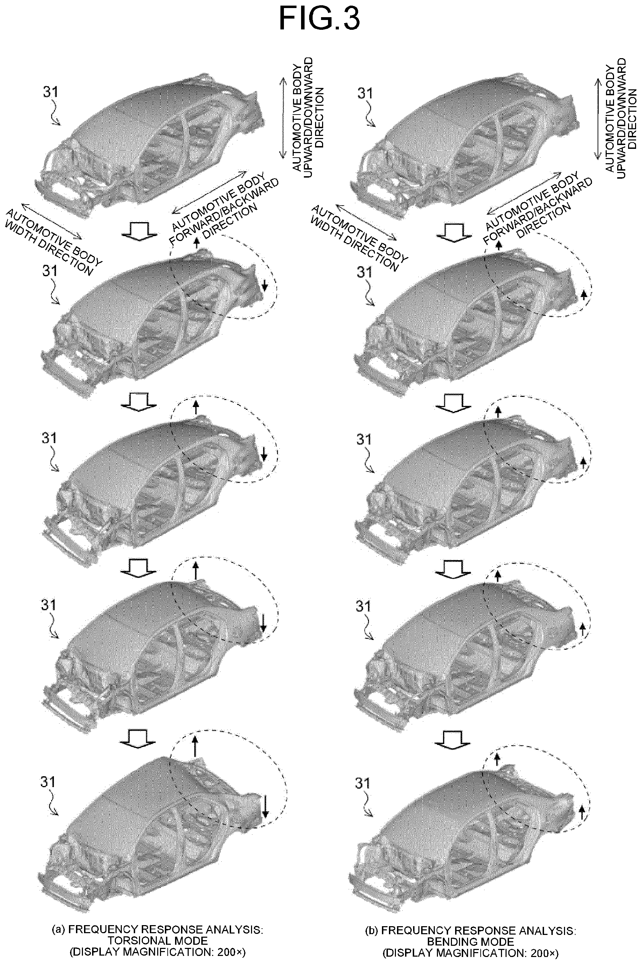

FIG. 3 illustrates, as an example, a state of deformation of the automotive body model 31 in each of a torsion mode and a bending mode that serve as a vibration mode obtained in frequency response analysis.

In the torsional mode illustrated in FIG. 3(a), a rear side (a portion surrounded with a broken-line ellipse in the drawing) in the automotive body model 31 has been deformed in an automotive body upward/downward direction in such a way that directions on left-hand and right-hand sides of the rear side are reverse to each other. On the other hand, in the bending mode illustrated in FIG. 3(b), the rear side (the portion surrounded with a broken-line ellipse in the drawing) in the automotive body model 31 has been deformed in the automotive body upward direction on both the left-hand and right-hand sides.

Note that a vibration condition that is imposed by the frequency response analysis unit 13 in frequency response analysis is not limited to the vibration conditions described above, and it is sufficient if a vibration condition is appropriately imposed according to deformation of a target automotive body model 31.

(Load Condition Determination Unit)

The load condition determination unit 15 determines a load condition (a position, a direction, or a magnitude where a load will be imposed) that corresponds to a deformation form in a vibration mode obtained by the frequency response analysis unit 13, and will be imposed on the automotive body model 31. It is sufficient if deformation of the automotive body model 31 at a point in time when the total displacement of the automotive body model 31 is a maximum is employed, for example, as the deformation form in the vibration mode.

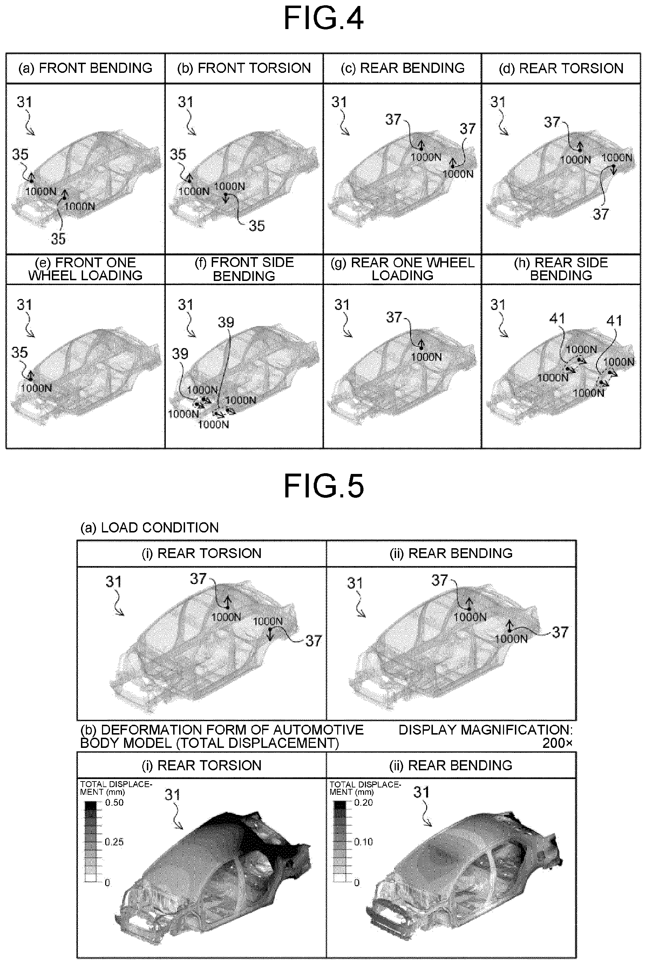

In the present embodiment, the load condition determined by the load condition determination unit 15 has been selected from eight load conditions (a) to (h) illustrated in FIG. 4. Note that these load conditions (a) to (h) excluding a magnitude of a load are load conditions that are generally imposed in stiffness analysis or the like of the automotive body model 31.

The load conditions (a) to (h) illustrated in FIG. 4 are described below.

(a) Front bending: a load condition in which a load in the same direction is imposed in the automotive body upward direction (or the automotive body downward direction) on both left-hand and right-hand front suspension mounted portions 35

(b) Front torsion: a load condition in which a load in the automotive body upward direction is imposed on one of the left-hand and right-hand front suspension mounted portions 35, and a load in the automotive body downward direction is imposed on another of the left-hand and right-hand front suspension mounted portions 35

(c) Rear bending: a load condition in which a load in the same direction is imposed in the automotive body upward direction (or the automotive body downward direction) on both left-hand and right-hand rear suspension mounted portions 37

(d) Rear torsion: a load condition in which a load in the automotive body upward direction is imposed on one of the left-hand and right-hand rear suspension mounted portions 37, and a load in the automotive body downward direction is imposed on another of the left-hand and right-hand rear suspension mounted portions 37

(e) Front one wheel loading: a load condition in which a load in the automotive body upward direction (or the automotive body downward direction) is imposed on any one of the left-hand and right-hand front suspension mounted portions 35

(f) Front side bending: a load condition in which a load in an automotive body width direction is imposed on a front subframe mounted portion 39

(g) Rear one wheel loading: a load condition in which a load in the automotive body upward direction (or the automotive body downward direction) is imposed on any one of the left-hand and right-hand rear suspension mounted portions 37

(h) Rear side bending: a load condition in which a load in the automotive body width direction is imposed on a rear subframe mounted portion 41

As examples indicating deformations of the automotive body model 31 on which these load conditions have been imposed, deformations at a time when load conditions of rear torsion and rear bending have been imposed on the automotive body model 31 are illustrated in FIG. 5. FIG. 5(a) illustrates a load condition (a position, a direction, and a magnitude where a load will be imposed) that will be imposed on the automotive body model 31. FIG. 5(b) is contour diagrams illustrating the total displacement (a value obtained by squaring displacement in each direction of the automotive body forward/backward direction, the automotive body width direction, and the automotive body upward/downward direction, and extracting a square root) that has been generated in the automotive body model 31 as a result of imposing a load condition. Note that a diagram illustrating a state of deformation of the automotive body model 31 on which another load condition illustrated in FIG. 5 has been imposed is omitted.

In a case where rear torsion (FIG. 5(a)(i)) has been imposed as a load condition, the rear side of the automotive body model 31 has been deformed in the automotive body upward/downward direction in such a way that directions on the left-hand and right-hand sides of the rear side are reverse to each other (FIG. 5(b)(i)). Therefore, in a case where a vibration mode obtained by the frequency response analysis unit 13 is the torsional mode illustrated in FIG. 3(a), the load condition determination unit 15 selects FIG. 4(d) rear torsion as a load condition.

On the other hand, in a case where rear bending (FIG. 5(a)(ii)) has been imposed as a load condition, the rear side of the automotive body model 31 has been deformed in the automotive body upward direction on both the left-hand and right-hand sides of the rear side (FIG. 5(b)(ii)). Therefore, in a case where a vibration mode obtained by the frequency response analysis unit 13 is the bending mode illustrated in FIG. 3(b), the load condition determination unit 15 selects FIG. 4(c) rear bending as a load condition.

As described above, a state of deformation of the automotive body model 31 at the time of imposing each of the load conditions illustrated in FIG. 4 has been preset, and therefore the load condition determination unit 15 can select a load condition that corresponds to a deformation form in a vibration mode obtained by the frequency response analysis unit 13, and will be imposed on the automotive body model 31, from among these load conditions.

Note that the load condition determined by the load condition determination unit 15 is not limited to a load condition in which a load is imposed in the direction illustrated in FIG. 4, and may be a load condition in which a load is imposed in an opposite direction. For example, the load condition of rear torsion illustrated in FIG. 4(d) may be a load condition in which loads are respectively imposed on the left-hand and right-hand rear suspension mounted portions 37 on the rear side of the automotive body model 31 in such a way that respective automotive body upward/downward directions of the loads are reverse to the directions of loads illustrated in FIG. 4(d).

(Optimization Analysis Model Generation Unit)

The optimization analysis model generation unit 17 sets an additional adhesive candidate 53 in a position candidate where the parts assembly of the automotive body model 31 will be adhesively bonded by using a structural adhesive, and generates an optimization analysis model 51 to be analyzed in optimization analysis, as illustrated in FIG. 2(b).

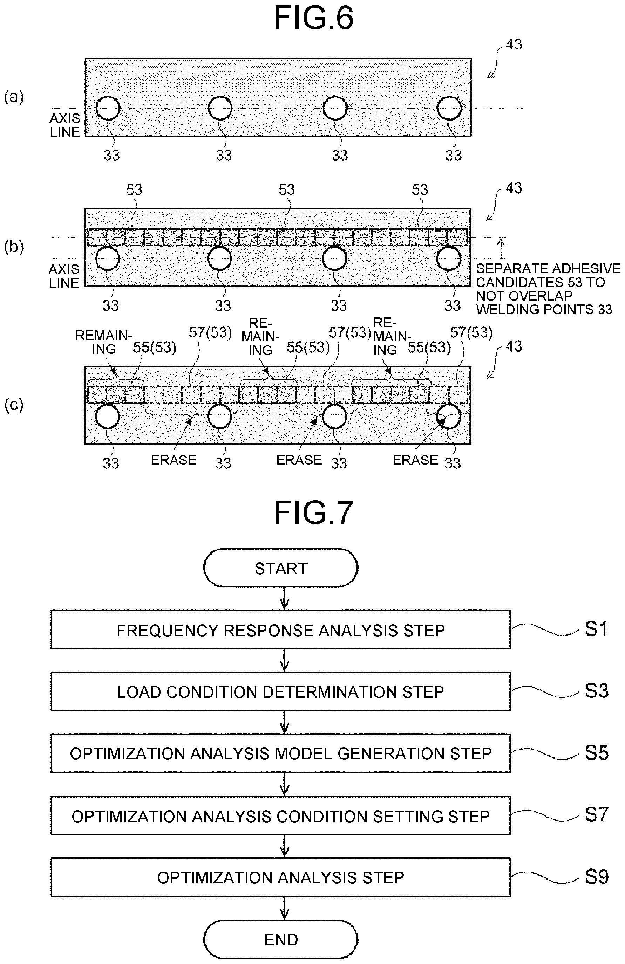

The adhesive candidate 53 in the optimization analysis model 51 is generated by performing the processing illustrated in FIG. 6. Specifically, the adhesive candidate 53 is continuously disposed in positions that do not overlap the welding points 33 that have been preset at predetermined intervals D in a portion (for example, a flange portion) where a plurality of parts included in the automotive body model 31 will be welded as parts assembly 43.

Note that disposition of the adhesive candidates of the parts assembly 43 in the present invention may be located on a side opposite to a side in FIG. 6 relative to an axis line of the welding points 33, or may be located on the axis line of the welding points 33. In addition, it is sufficient if a width or a total length of the adhesive candidate, a distance from the welding point 33, or the like is appropriately set. Further, the adhesive candidate is not always continuously disposed over the total length of the parts assembly 43, as illustrated in FIG. 6, and adhesive candidates that are continuously disposed to have a predetermined length may be discretely disposed. In this case, similarly, it is sufficient if a length of the continuously disposed adhesive candidates, an interval between the continuously disposed adhesive candidates, or the like is appropriately set.

In addition, it is desirable that the additional adhesive candidate 53 in the optimization analysis model 51 include a three-dimensional element, but this is not restrictive. The additional adhesive candidate 53 may include a two-dimensional element and/or a beam element.

(Optimization Analysis Condition Setting Unit)

The optimization analysis condition setting unit 19 sets an optimization analysis condition for performing optimization analysis using, as an optimization target, the adhesive candidate 53 in the optimization analysis model 51 that has been generated by the optimization analysis model generation unit 17.

As the optimization analysis condition, two types, objectives and constraints, are set. The objectives are an optimization analysis condition that is set according to an object of optimization analysis, and examples include objectives in which strain energy is minimized, objectives in which absorbed energy is maximized and generated stress is minimized, and the like. Only one type of objectives is set. Constraints are constraints imposed in performing optimization analysis, and examples include constraints in which the optimization analysis model 51 generated from the automotive body model 31 after bonding and joining respective parts is caused to have predetermined stiffness, constraints in which a remaining adhesive candidate is caused to have a predetermined ratio (length), and the like. Plural types of constraints can be set.

(Optimization Analysis Unit)

The optimization analysis unit 21 imposes a load condition determined by the load condition determination unit 15 on the optimization analysis model 51, performs optimization analysis, and obtains an adhesive candidate 53 that satisfies an optimization analysis condition, as an optimized adhesive portion 55 where each parts assembly will be bonded and joined. Specifically, the optimization analysis unit 21 obtains, as the optimized adhesive portion 55, an adhesive candidate 53 that satisfies an optimization analysis condition (objectives or constraints) that has been set by the optimization analysis condition setting unit 19 from among adhesive candidates 53 in the optimization analysis model 51.

For example, in the parts assembly 43 in which the welding points 33 have been set, as illustrated in FIG. 6(a), in a case where adhesive candidates 53 that are continuously disposed to be spaced apart from the welding points 33, as illustrated in FIG. 6(b), are optimization targets, the optimization analysis unit 21 selects, as the optimized adhesive portion 55, an adhesive candidate 53 that satisfies an optimization analysis condition, as illustrated in FIG. 6(c). Then, adhesive candidates 53 that have not been selected are erased as erasing adhesive portions 57.

Note that topology optimization can be applied to optimization analysis performed by the optimization analysis unit 21. Then, in using the density method in topology optimization, in a case where there are many intermediate densities, it is preferable that discretization be performed, as expressed by Formula (1).

$$K'(\rho) = \rho^{p}K \qquad (1)$$

where

K': stiffness matrix obtained by imposing penalty on
stiffness matrix of element
K: stiffness matrix of element
$\rho$: normalized density
p: penalty coefficient

A penalty coefficient that is often used in discretization is 2 or more, but it is preferable that a penalty coefficient be 4 or more in optimization of a joining position according to the present invention.

Then, topology optimization is performed, an adhesive candidate that does not satisfy the optimization analysis condition (objectives, constraints, or a load condition) that has been set by the optimization analysis condition setting unit 19 is erased, and a significant adhesive candidate that satisfies the optimization analysis condition remains. Therefore, a position of the remaining adhesive candidate can be determined as a position where adhesive bonding will be performed by using a structural adhesive.

For example, in a case where optimization analysis has been performed by using, as an analysis target, adhesive candidates 53 that are continuously disposed, as illustrated in FIG. 6(b), and optimized adhesive portions 55 that satisfy an optimization analysis condition remain, and erasing adhesive portions 57 other than the optimized adhesive portions 55 have been erased, as illustrated in FIG. 6(c), it is sufficient if positions of the remaining optimized adhesive portions 55 are obtained as optimized positions where adhesive boning will be performed by applying the structural adhesive. In addition, in a case where adhesive candidates are disposed to be superimposed onto the welding points 33 (not illustrated), similarly, it is sufficient if positions of optimized adhesive portions that remain in such a way that an optimization analysis condition is satisfied are obtained as optimized positions where adhesive bonding will be performed by applying the structural adhesive.

Note that the optimization analysis unit 21 may perform optimization processing by using topology optimization, or may perform optimization processing by using another calculation scheme. As the optimization analysis unit 21, for example, commercially available optimization analysis software that uses the finite element method can be used.

In addition, in optimization analysis performed by the optimization analysis unit 21, an inertia force that acts during traveling of an automobile is taken into consideration according to the inertia relief method. The inertia relief method is an analysis technique for obtaining stress or strain from a force that acts on an object during constant acceleration motion in a state (free support) where the object is supported at a support point serving as a reference of coordinates of the inertia force, and has been used in static analysis of airplanes or ships during motion.

<Optimization Analysis Method of Adhesive Position in Automotive Body>

An optimization analysis method of a joining position in an automotive body (hereinafter simply referred to as an "optimization analysis method") according to the embodiment of the present invention is a method for obtaining an optimized position where adhesive bonding will be performed by using a structural adhesive in conjunction with welding for bonding and joining, as a parts assembly, a plurality of parts that are included in the automotive body model 31. The optimization analysis method includes a frequency response analysis step S1, a load condition determination step S3, an optimization analysis model generation step S5, an optimization analysis condition setting step S7, and an optimization analysis step S9, as illustrated in FIG. 7. These respective steps are described below. Note that it is assumed that the respective steps are performed by the optimization analysis apparatus 1 (FIG. 1) that includes a computer.

<<Frequency Response Analysis Step>>

The frequency response analysis step S1 is a step of imposing a predetermined vibration condition on the automotive body model 31, performing frequency response analysis, and obtaining a vibration mode generated in the automotive body model 31, and a deformation form in the vibration mode. In the optimization analysis apparatus 1 illustrated in FIG. 1, the frequency response analysis unit 13 performs this step.

Then, in the present embodiment, as a vibration condition in frequency response analysis, a vibration condition in which a sign wave load is input in the automotive body upward direction to the rear suspension mounted portion 37 (see FIG. 4(c)) of the automotive body model 31 has been imposed.

Note that the vibration condition that is imposed in frequency response analysis in the frequency response analysis step S1 is not limited to the condition described above, and it is sufficient if a vibration condition is appropriately imposed according to deformation of a target automotive body model 31.

<<Load Condition Determination Step>>

The load condition determination step S3 is a step of determining a load condition that is imposed on the automotive body model 31 in accordance with a deformation form in the vibration mode obtained in the frequency response analysis step S1, and is performed by the load condition determination unit 15 in the optimization analysis apparatus 1 illustrated in FIG. 1.

In the optimization analysis method according to the present embodiment, in the load condition determination step S3, one or more load conditions have been selected from eight load conditions (a) to (h) illustrated in FIG. 4. However, in the load condition determination step S3, a position (the front suspension mounted portion 35, the rear suspension mounted portion 37, or the like) of a load to be input to the automotive body model 31, and a direction and a magnitude of the load may be appropriately changed, and a load condition that can more satisfactorily provide the automotive body model 31 with a deformation form in the vibration mode obtained in the frequency response analysis step S1 may be determined.

<<Optimization Analysis Model Generation Step>>

The optimization analysis model generation step S5 is a step of setting an additional adhesive candidate 53 serving as a candidate for adhesively bonding parts of the automotive body model 31 as a parts assembly, and generating an optimization analysis model 51 to be analyzed in optimization analysis, as illustrated in FIG. 2(b). In the optimization analysis apparatus 1 illustrated in FIG. 1, the optimization analysis model generation unit 17 performs this step.

In the present embodiment, in the optimization analysis model generation step S5, the adhesive candidate 53 in the optimization analysis model 51 has been generated according to the procedure illustrated in FIG. 6.

<<Optimization Analysis Condition Setting Step>>

The optimization analysis condition setting step S7 is a step of setting an optimization analysis condition for performing optimization analysis using, as an optimization target, the adhesive candidate 53 (FIG. 6(b)) that has been set in the optimization analysis model 51 that has been generated in the optimization analysis model generation step S5. In the optimization analysis apparatus 1 illustrated in FIG. 1, the optimization analysis condition setting unit 19 performs this step. Then, as the optimization analysis condition, two types, objectives and constraints, are set, as described above.

<<Optimization Analysis Step >>

The optimization analysis step S9 is a step of imposing the load condition determined in the load condition determination step S3 on the optimization analysis model 51, performing optimization analysis, and obtaining an adhesive candidate 53 that satisfies the optimization analysis condition that has been set in the optimization analysis condition setting step S7, as an optimized adhesive portion where adhesive bonding will be performed in conjunction with welding in each parts assembly. In the optimization analysis apparatus 1 illustrated in FIG. 1, the optimization analysis unit 21 performs this step.

In the optimization analysis step S9, as a procedure of obtaining the optimized adhesive portion, in a case where the adhesive candidate 53 illustrated in FIG. 6(b) is used as an optimization target, an adhesive candidate 53 that satisfies the optimization analysis condition is selected as the optimized adhesive portion 55, and an adhesive candidate 53 that has not been selected is erased as the erasing adhesive portion 57, as illustrated in FIG. 6(c).

Topology optimization can be applied to optimization analysis in the optimization analysis step S9. Further, in a case where the density method is applied in topology optimization, it is preferable that a value of a penalty coefficient of an element be set to 4 or more, and discretization be performed.

Furthermore, in optimization analysis, an inertia force that acts on the automotive body model 31 is taken into consideration by using the inertia relief method.

As described above, by employing the optimization analysis method and the apparatus of the adhesive position in the automotive body according to the present embodiment, with respect to the automotive body model 31 (FIG. 2) of an automobile including the welding point 33 where a plurality of parts will be bonded and joined as a parts assembly, a load condition that corresponds to a deformation form in a vibration mode of the automotive body model 31 is determined, the optimization analysis model 51 in which the adhesive candidate 53 serving as a candidate for adhesively bonding the parts assembly by using a structural adhesive has been set in the automotive body model 31 is generated, the determined load condition is imposed on the generated optimization analysis model 51, optimization analysis is performed, and the optimized adhesive portion 55 where the parts assembly will be adhesively bonded is obtained. By doing this, an optimized position where adhesive bonding will be performed by applying the structural adhesive to the parts assembly in conjunction with the welding points 33 can be obtained in order to improve dynamic stiffness pertaining to vibration characteristics of the automotive body model 31.

In addition, in the optimization analysis method and the apparatus of the adhesive position in the automotive body according to the present embodiment described above, frequency response analysis is performed to obtain a deformation form in a vibration mode generated in an automotive body model. However, in another aspect of the present embodiment, for example, eigenvalue analysis is performed instead of frequency response analysis to obtain a deformation form in a vibration mode generated in an automotive body model.

The eigenvalue analysis is an analysis technique for obtaining a characteristic frequency or an eigenmode (a mode of vibration) that serves as vibration characteristics that a structural body has. Then, in the eigenvalue analysis, a vibration condition (an input load) is not needed, and a deformation form in a vibration mode can be obtained.

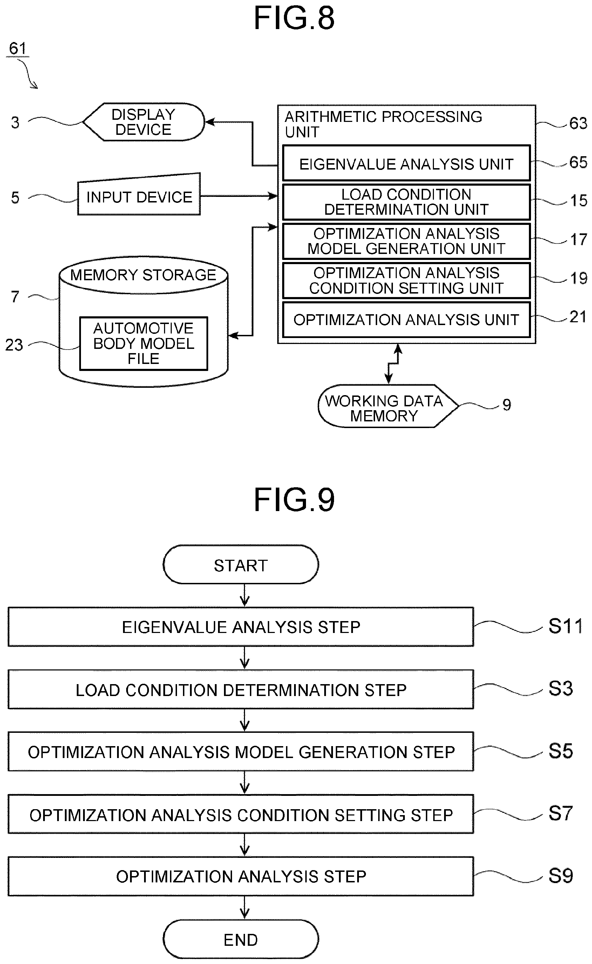

FIG. 8 illustrates a block diagram of an optimization analysis apparatus 61 in the other aspect of the present embodiment. An arithmetic processing unit 63 of the optimization analysis apparatus 61 includes an eigenvalue analysis unit 65 that performs eigenvalue analysis on the automotive body model 31 instead of the frequency response analysis unit 13 in the arithmetic processing unit 11 of the optimization analysis apparatus 1. Components other than the eigenvalue analysis unit 65 respectively have the same functions as functions of the components described above other than the frequency response analysis unit 13 of the optimization analysis apparatus 1.

Further, FIG. 9 illustrates a flow in an optimization analysis method of an adhesive position in an automotive body in the other aspect of the present embodiment. Respective steps other than an eigenvalue analysis step S11 in FIG. 9 are steps of performing the same processes as processes of the respective steps described above other than the frequency response analysis step S1 illustrated in FIG. 7.

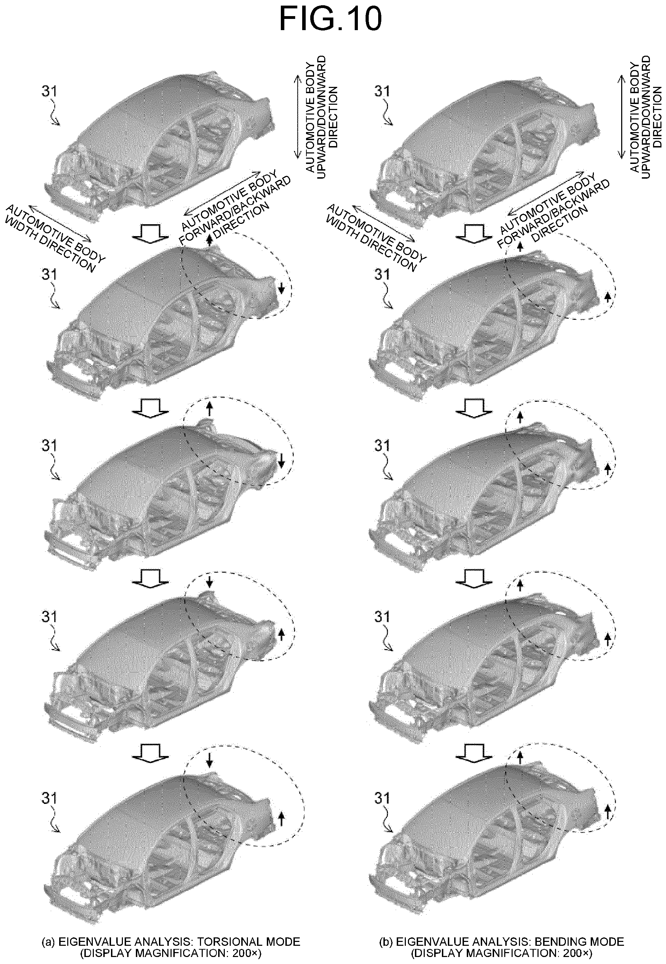

In the optimization analysis method and the apparatus of the adhesive position in the automotive body in the other aspect of the present embodiment, as described above, similarly, the torsional mode, the bending mode, or the like serving as a vibration mode generated in the automotive body model 31 can be obtained by performing eigenvalue analysis, as illustrated as an example in FIG. 10.

Then, a load condition that corresponds to a deformation form in the vibration mode obtained in eigenvalue analysis and will be imposed on the automotive body model 31 is determined, the determined load condition is imposed on the optimization analysis model 51 (FIG. 2(b)), and optimization analysis is performed. Therefore, the optimized adhesive portion 55 where adhesive bonding will be performed by using a structural adhesive in conjunction with welding for bonding and joining a parts assembly in the automotive body model 31 can be obtained.

[Examples]

Analysis was conducted to check effects of the present invention, and this analysis is described below. In the present example, the automotive body model 31 in which the welding points 33 where a plurality of parts will be welded as a parts assembly have been preset, as illustrated in FIG. 2(a), was used as a target, and optimization analysis was performed to obtain an optimized position where adhesive bonding will be performed by using a structural adhesive in conjunction with welding.

First, frequency response analysis and eigenvalue analysis were performed on the automotive body model 31, and a vibration mode generated in the automotive body model 31 was obtained. In the present example, in both frequency response analysis and eigenvalue analysis, a torsional mode (see FIG. 3(a) and FIG. 10(a)) and a bending mode (see FIG. 3(b) and FIG. 10(b)) were obtained as the vibration mode.

Next, a load condition that corresponds to a deformation form in each of the bending mode and the torsional mode and will be imposed on the automotive body model 31 was determined. In determination of the load condition, from among the eight load conditions illustrated in FIG. 4, a load condition of rear torsion (FIG. 4(d)) was selected for the torsional mode, and a load condition of rear bending (FIG. 4(c)) was selected for the bending mode.

Next, additional adhesive candidates 53 were set in the automotive body model 31, and the optimization analysis model 51 was generated. In setting of the adhesive candidates 53, the adhesive candidates 53 were separated from an axis line of the welding points 33 that were preset in each parts assembly in the automotive body model 31 illustrated in FIG. 2(a), and the adhesive candidates 53 were continuously disposed in such a way that the welding points 33 do not overlap the adhesive candidates 53 (see FIG. 6).

Next, each of objectives and constraints was set as an optimization analysis condition in the optimization analysis model 51. In the present example, as the objectives, minimizing compliance (maximizing stiffness) was set, and as the constraints, a ratio (a length) of a remaining adhesive candidate was set.

Then, under the imposed optimization analysis condition, optimization analysis was performed by using the adhesive candidates 53 of the optimization analysis model 51 as an optimization target, and an optimized adhesive portion was obtained. In the present example, it was assumed that an application length of the optimized adhesive portion is 79 m, 54 m, 28 m, and 14 m. In addition, in optimization analysis, an inertia force that acts on the optimization analysis model 51 was taken into consideration according to the inertia relief method.

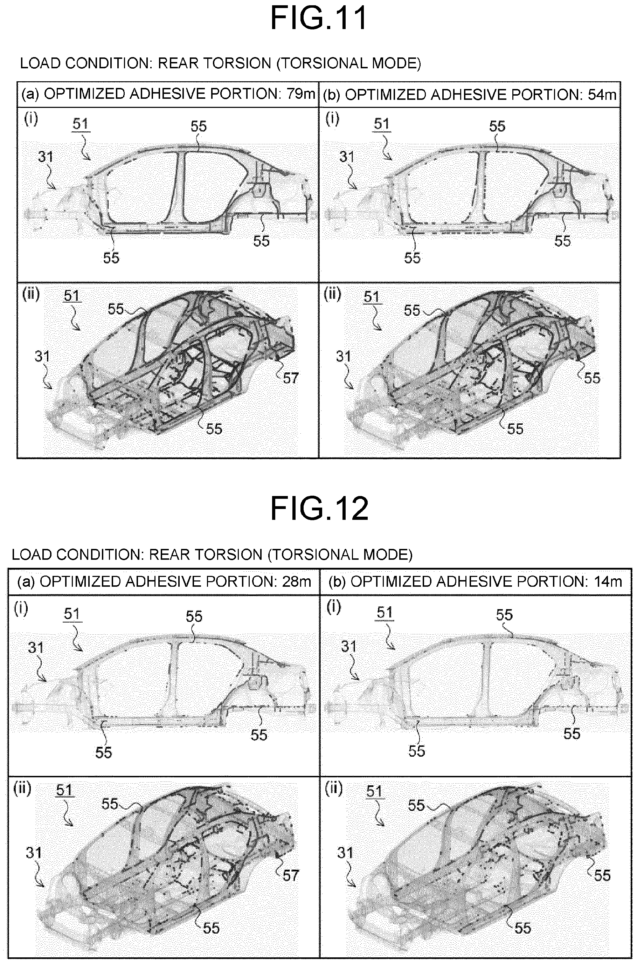

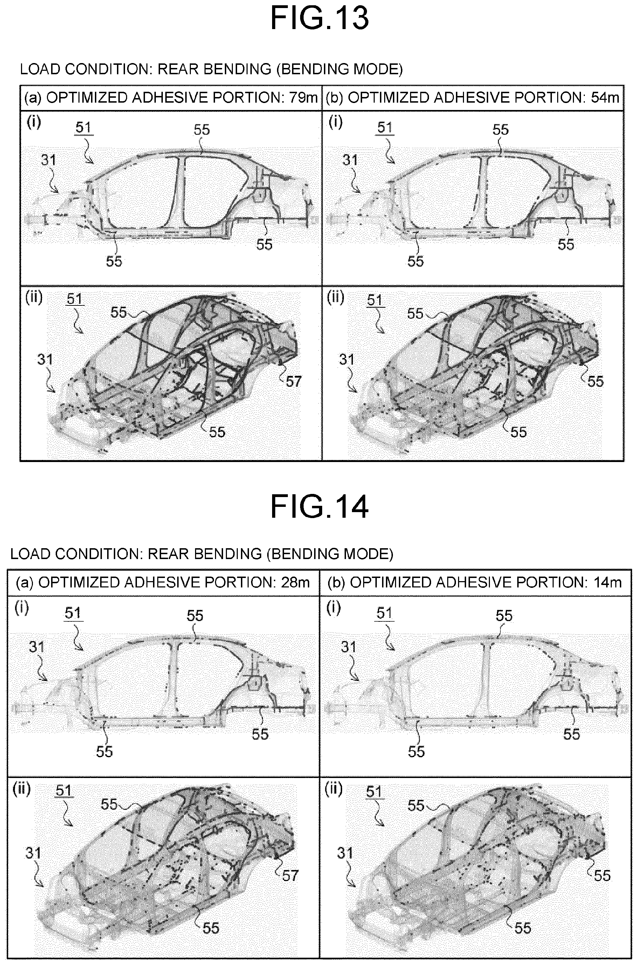

FIGS. 11 and 12 illustrate a result of an optimized adhesive portion 55 that was obtained by imposing a load condition that corresponds to a deformation form in the torsional mode serving as a vibration mode obtained in frequency response analysis, and performing optimization analysis. In addition, FIGS. 13 and 14 illustrate a result of an optimized adhesive portion 55 that was obtained by imposing a load condition that corresponds to a deformation form in the bending mode serving as a vibration mode obtained in frequency response analysis, and performing optimization analysis. As illustrated in FIGS. 11 to 14, in all of the cases where the load condition that corresponds to the deformation form in the torsional mode or the bending mode was imposed, an optimized position where adhesive bonding will be performed by using a structural adhesive in the automotive body model 31 was obtained in accordance with an application length of the optimized adhesive portion 55.

Further, frequency response analysis and eigenvalue analysis were performed on the optimization analysis model 51 in which the optimized adhesive portion 55 was set, and a frequency response of the optimization analysis model 51 and a change in vibration characteristics due to setting of the optimized adhesive portion 55 were obtained.

In frequency response analysis of the optimization analysis model 51, a vibration condition in which a sign wave load is input in the automotive body upward/downward direction to a rear suspension mounted portion (the same position as a position of the rear suspension mounted portion 37 in the automotive body model 31 illustrated in FIG. 5(a)) was imposed.

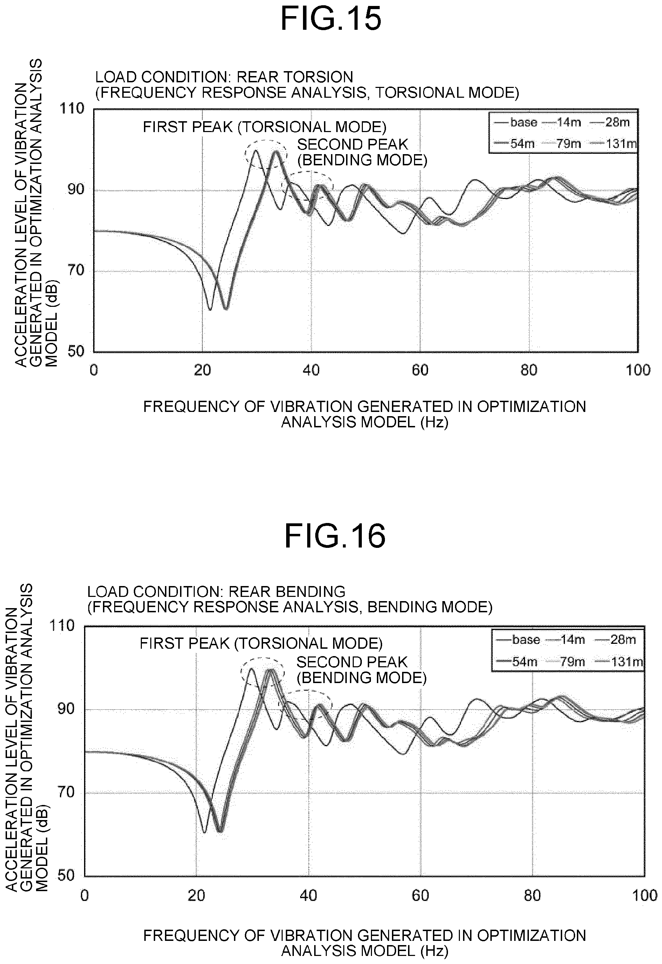

As an example of a result of a frequency response, results of a frequency response of optimization analysis models 51 (FIGS. 11 to 14) that are different in a load condition and an application length of the optimized adhesive portion 55 are illustrated in FIGS. 15 and 16.

FIG. 15 illustrates a result of an optimization analysis model 51 obtained by setting an optimized adhesive portion 55 obtained in optimization analysis in which a load condition that corresponds to a deformation form in the torsional mode (FIG. 3(a)) obtained in frequency response analysis was imposed. FIG. 16 illustrates a result of an optimization analysis model 51 obtained by setting an optimized adhesive portion 55 obtained in optimization analysis in which a load condition that corresponds to a deformation form in the bending mode (FIG. 3(b)) obtained in frequency response analysis was imposed.

In addition, in FIGS. 15 and 16, a horizontal axis indicates a frequency (Hz) of vibration generated in the optimization analysis model 51 in frequency response analysis, and a vertical axis indicates an acceleration level (dB) of vibration generated in the optimization analysis model 51. In addition, in these diagrams, base is a result of the automotive body model 31 (FIG. 2(a)) in which an optimized adhesive portion was not set, and only the welding points 33 were set, and 131 m is a result of the optimization analysis model 51 (FIG. 2(b)) in which the entire length of the adhesive candidate 53 was set with no change.

In the frequency responses illustrated in FIGS. 15 and 16, a first peak is a frequency in the torsional mode, and a second peak is a frequency in vibration in the bending mode. Then, in both cases where load conditions that correspond to deformation forms in the torsional mode and the bending mode were respectively imposed, application was performed in a position of the optimized adhesive portion 55, and therefore a frequency in the torsional mode or the bending mode increased in comparison with an original automotive body model 31. This indicates that a frequency of vibration generated in an automotive body increases, and dynamic stiffness is improved by applying a structural adhesive in the position of the optimized adhesive portion 55 and performing adhesive bonding.

Further, a relationship between an application length of the optimized adhesive portion 55 set in the optimization analysis model 51 and a frequency in each of the torsional mode and the bending mode was examined.

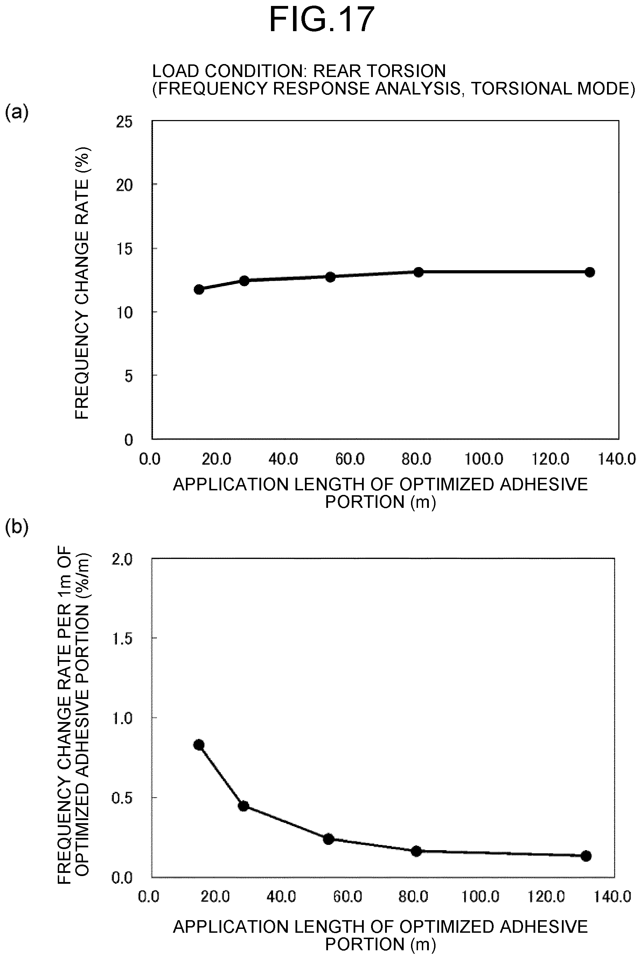

FIG. 17 illustrates a result of a frequency change rate in the torsional mode in a frequency response of an optimization analysis model 51 with respect to an optimization analysis model 51 obtained by setting an optimized adhesive portion 55 obtained by imposing a load condition that corresponds to a deformation form in the torsional mode that was obtained in frequency response analysis, and performing optimization analysis. Here, as the frequency change rate, a change in a frequency in each mode in a frequency response of the optimization analysis model 51 was obtained by using an original automotive body model 31 as a reference.

In FIG. 17, a horizontal axis indicates an application length of the optimized adhesive portion 55 set in the optimization analysis model 51. In addition, a vertical axis in FIG. 17(a) indicates a frequency change rate in the torsional mode, and a vertical axis in FIG. 17(b) indicates a frequency change rate (%/m) per unit length of the optimized adhesive portion 55.

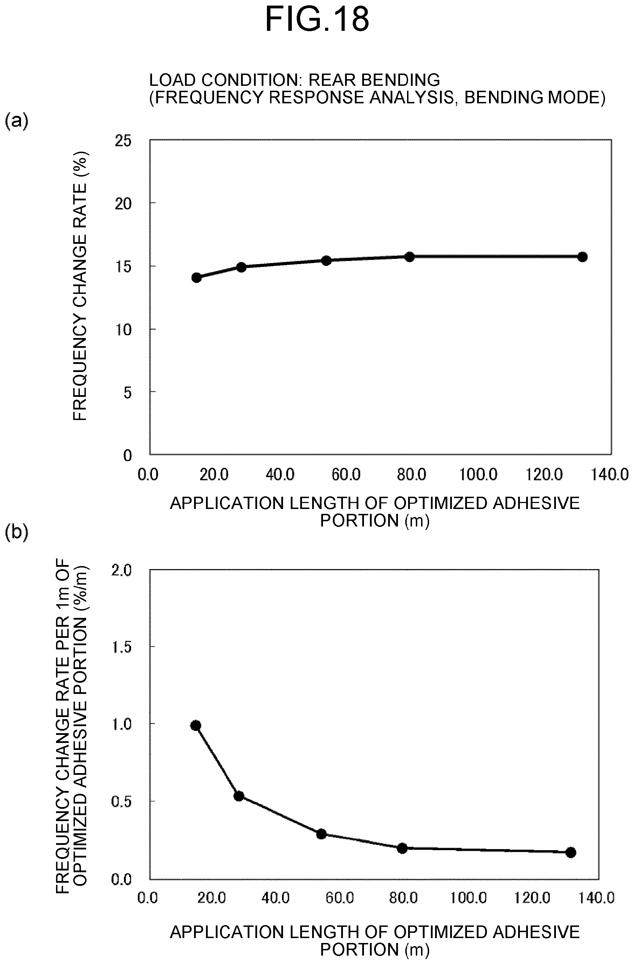

FIG. 18 illustrates a result of a frequency change rate in the bending mode in a frequency response of an optimization analysis model 51 with respect to an optimization analysis model 51 obtained by setting an optimized adhesive portion 55 obtained by imposing a load condition that corresponds to a deformation form in the bending mode obtained in frequency response analysis, and performing optimization analysis. A horizontal axis and a vertical axis in FIG. 18 are similar to the horizontal axis and the vertical axis of FIG. 17 that have been described above.

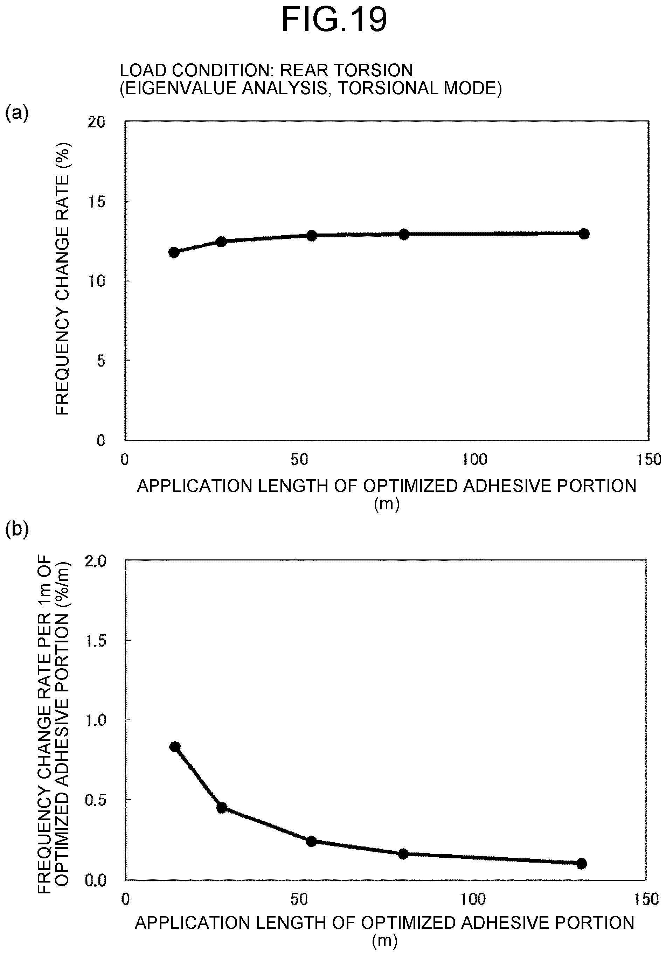

FIG. 19 illustrates a result of a frequency change rate in the torsional mode in a frequency response of an optimization analysis model 51 with respect to an optimization analysis model 51 obtained by setting an optimized adhesive portion 55 obtained by imposing a load condition that causes deformation in the torsional mode that was obtained in eigenvalue analysis, and performing optimization analysis. A horizontal axis and a vertical axis in FIG. 19 are similar to the horizontal axis and the vertical axis of FIG. 17 that have been described above.

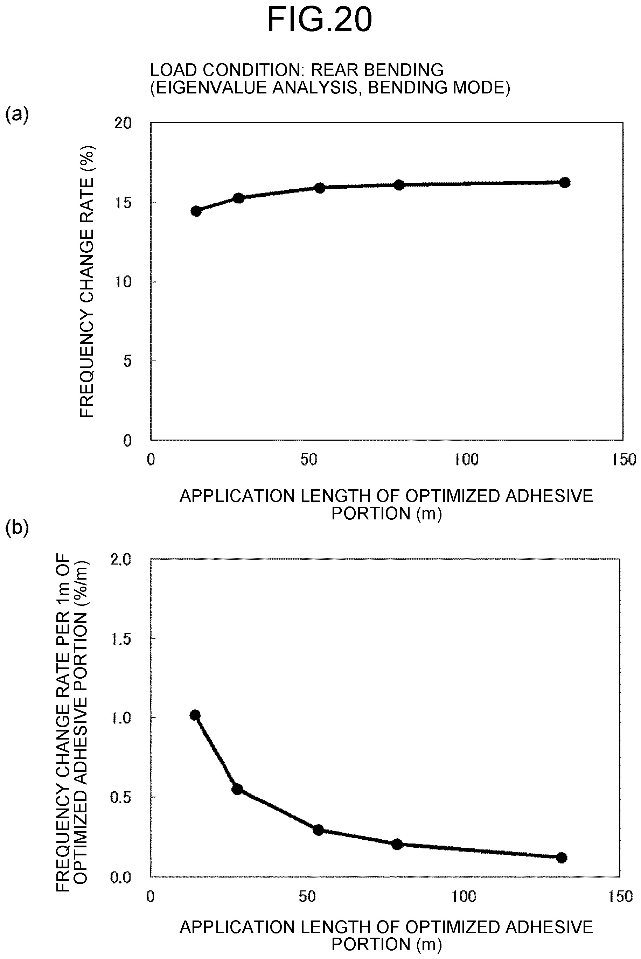

FIG. 20 illustrates a result of a frequency change rate in the bending mode in a frequency response of an optimization analysis model 51 with respect to an optimization analysis model 51 obtained by setting an optimized adhesive portion 55 obtained by imposing a load condition that causes deformation in the bending mode that was obtained in eigenvalue analysis, and performing optimization analysis. A horizontal axis and a vertical axis in FIG. 20 are similar to the horizontal axis and the vertical axis of FIG. 17 that have been described above.

As illustrated in FIGS. 17 to 20, if a structural adhesive was applied to the optimized adhesive portion 55, a frequency change rate was remarkably improved, and then if an application length increased, the frequency change rate was further improved gradually. In addition, a frequency change rate per unit length of the optimized adhesive portion 55 decreased. Therefore, by applying a structural adhesive in a position of the optimized adhesive portion 55 and performing adhesive bonding, an effect of improving dynamic stiffness of an automotive body was exhibited. In addition, an increase in an application length of the optimized adhesive portion 55 resulted in the saturation of the effect.

Industrial Applicability

According to the present invention, an optimization analysis method and an apparatus of an adhesive position in an automotive body for obtaining an optimized position where a parts assembly is adhesively bonded by using a structural adhesive in conjunction with welding for bonding and joining the parts assembly in the automotive body in order to improve dynamic stiffness pertaining to vibration characteristic of the automotive body, can be provided.

Reference Signs List

1　　OPTIMIZATION ANALYSIS APPARATUS

3　　DISPLAY DEVICE
5　　INPUT DEVICE
7　　MEMORY STORAGE

9  WORKING DATA MEMORY
11  ARITHMETIC PROCESSING UNIT
13  FREQUENCY RESPONSE ANALYSIS UNIT
15  LOAD CONDITION DETERMINATION UNIT
17  OPTIMIZATION ANALYSIS MODEL GENERATION UNIT
19  OPTIMIZATION ANALYSIS CONDITION SETTING UNIT
21  OPTIMIZATION ANALYSIS UNIT
23  AUTOMOTIVE BODY MODEL FILE
31  AUTOMOTIVE BODY MODEL
33  WELDING POINT
35  FRONT SUSPENSION MOUNTED PORTION
37  REAR SUSPENSION MOUNTED PORTION
39  FRONT SUBFRAME MOUNTED PORTION
41  REAR SUBFRAME MOUNTED PORTION
43  PARTS ASSEMBLY
51  OPTIMIZATION ANALYSIS MODEL
53  ADHESIVE CANDIDATE
55  OPTIMIZED ADHESIVE PORTION
57  ERASING ADHESIVE PORTION
61  OPTIMIZATION ANALYSIS APPARATUS
63  ARITHMETIC PROCESSING UNIT
65  EIGENVALUE ANALYSIS UNIT

**Claims**

1. An optimization analysis method of an adhesive position in an automotive body for obtaining an optimized position where a parts assembly is adhesively bonded by using a structural adhesive in conjunction with welding, the method being executed by a computer using an automotive body model including a plurality of parts including a two-dimensional element and/or a three-dimensional element wherein a welding portion to which the plurality of parts are welded as the parts assembly is preset, and the method comprising:

  a frequency response analysis step of imposing a predetermined vibration condition on the automotive body model, performing frequency response analysis, and obtaining a vibration mode generated in the automotive body model, and a deformation form in the vibration mode;
  a load condition determination step of determining a load condition to be imposed on the automotive body model, the load condition corresponding to the deformation form in the obtained vibration mode;
  an optimization analysis model generation step of generating an optimization analysis model obtained by setting an adhesive candidate in the automotive body model, the adhesive candidate serving as a candidate for adhesive bonding of the parts assembly;
  an optimization analysis condition setting step of setting an optimization analysis condition used to perform optimization analysis by using, as an optimization target, the adhesive candidate set in the generated optimization analysis model; and
  an optimization analysis step of imposing the load condition determined in the load condition determination step on the optimization analysis model, performing the optimization analysis, and obtaining the adhesive candidate that satisfies the optimization analysis condition, as an optimized adhesive portion where each parts assembly is bonded and joined.

2. An optimization analysis method of an adhesive position in an automotive body for obtaining an optimized position where a parts assembly is adhesively bonded by using a structural adhesive in conjunction with welding, the method being executed by a computer using an automotive body model including a plurality of parts including a two-dimensional element and/or a three-dimensional element wherein a welding portion to which the plurality of parts are welded as the parts assembly is preset, and the method comprising:

  an eigenvalue analysis step of performing eigenvalue analysis on the automotive body model, and obtaining a vibration mode generated in the automotive body model, and a deformation form in the vibration mode;
  a load condition determination step of determining a load condition to be imposed on the automotive body model, the load condition corresponding to the deformation form in the obtained vibration mode;

an optimization analysis model generation step of generating an optimization analysis model obtained by setting an adhesive candidate in the automotive body model, the adhesive candidate serving as a candidate for adhesive bonding of the parts assembly;

an optimization analysis condition setting step of setting an optimization analysis condition used to perform optimization analysis by using, as an optimization target, the adhesive candidate set in the generated optimization analysis model; and

an optimization analysis step of imposing the load condition determined in the load condition determination step on the optimization analysis model, performing the optimization analysis, and obtaining the adhesive candidate that satisfies the optimization analysis condition, as an optimized adhesive portion where each parts assembly is bonded and joined.

3. An optimization analysis apparatus of an adhesive position in an automotive body for obtaining an optimized position where a parts assembly is adhesively bonded by using a structural adhesive in conjunction with welding, by using an automotive body model including a plurality of parts including a two-dimensional element and/or a three-dimensional element wherein a welding portion to which the plurality of parts are welded as the parts assembly is preset, the optimization analysis apparatus comprising:

a frequency response analysis unit configured to

impose a predetermined vibration condition on the automotive body model,
perform frequency response analysis, and
obtain a vibration mode generated in the automotive body model, and a deformation form in the vibration mode;

a load condition determination unit configured to determine a load condition to be imposed on the automotive body model, the load condition corresponding to the deformation form in the obtained vibration mode;
an optimization analysis model generation unit configured to generate an optimization analysis model obtained by setting an adhesive candidate in the automotive body model, the adhesive candidate serving as a candidate for adhesive bonding of the parts assembly;
an optimization analysis condition setting unit configured to set an optimization analysis condition used to perform optimization analysis by using, as an optimization target, the adhesive candidate set in the generated optimization analysis model; and
an optimization analysis unit configured to

impose the load condition determined by the load condition determination unit on the optimization analysis model in which the optimization analysis condition has been set,
perform the optimization analysis, and
obtain the adhesive candidate that satisfies the optimization analysis condition, as an optimized adhesive portion where each parts assembly is adhesively bonded.

4. An optimization analysis apparatus of an adhesive position in an automotive body for obtaining an optimized position where a parts assembly is adhesively bonded by using a structural adhesive in conjunction with welding, by using an automotive body model including a plurality of parts including a two-dimensional element and/or a three-dimensional element wherein a welding portion to which the plurality of parts are welded as the parts assembly is preset, the optimization analysis apparatus comprising:

an eigenvalue analysis unit configured to

perform eigenvalue analysis on the automotive body model, and
obtain a vibration mode generated in the automotive body model, and a deformation form in the vibration mode;

a load condition determination unit configured to determine a load condition to be imposed on the automotive body model, the load condition corresponding to the deformation form in the obtained vibration mode;
an optimization analysis model generation unit configured to generate an optimization analysis model obtained by setting an adhesive candidate in the automotive body model, the adhesive candidate serving as a candidate for adhesive bonding of the parts assembly;
an optimization analysis condition setting unit configured to set an optimization analysis condition used to perform optimization analysis by using, as an optimization target, the adhesive candidate set in the generated optimization analysis model; and

an optimization analysis unit configured to

impose the load condition determined by the load condition determination unit on the optimization analysis model in which the optimization analysis condition has been set,

perform the optimization analysis, and

obtain the adhesive candidate that satisfies the optimization analysis condition, as an optimized adhesive portion where each parts assembly is adhesively bonded.

# FIG.1

1

3 — DISPLAY DEVICE

5 — INPUT DEVICE

7 — MEMORY STORAGE

23 — AUTOMOTIVE BODY MODEL FILE

ARITHMETIC PROCESSING UNIT — 11

FREQUENCY RESPONSE ANALYSIS UNIT — 13

LOAD CONDITION DETERMINATION UNIT — 15

OPTIMIZATION ANALYSIS MODEL GENERATION UNIT — 17

OPTIMIZATION ANALYSIS CONDITION SETTING UNIT — 19

OPTIMIZATION ANALYSIS UNIT — 21

WORKING DATA MEMORY — 9

# FIG.2

| (a) AUTOMOTIVE BODY MODEL | (b) OPTIMIZATION ANALYSIS MODEL (ADDITIONAL ADHESIVE CANDIDATE: 131m) |
|---|---|
| (i) 31 33 33 33 | (i) 51 53 31 53 53 |
| (ii) 31 33 33 33 | (ii) 51 31 53 53 |

# FIG.3

(a) FREQUENCY RESPONSE ANALYSIS:
TORSIONAL MODE
(DISPLAY MAGNIFICATION: 200×)

(b) FREQUENCY RESPONSE ANALYSIS:
BENDING MODE
(DISPLAY MAGNIFICATION: 200×)

# FIG.4

| (a) FRONT BENDING | (b) FRONT TORSION | (c) REAR BENDING | (d) REAR TORSION |
|---|---|---|---|
| | | | |
| (e) FRONT ONE WHEEL LOADING | (f) FRONT SIDE BENDING | (g) REAR ONE WHEEL LOADING | (h) REAR SIDE BENDING |
| | | | |

# FIG.5

(a) LOAD CONDITION

| (i) REAR TORSION | (ii) REAR BENDING |
|---|---|
| | |

(b) DEFORMATION FORM OF AUTOMOTIVE BODY MODEL (TOTAL DISPLACEMENT)   DISPLAY MAGNIFICATION: 200×

| (i) REAR TORSION | (ii) REAR BENDING |
|---|---|
| | |

# FIG.6

(a)

AXIS LINE

33    33    33    33

43

(b)

53    53    53    43

AXIS LINE

33    33    33    33

SEPARATE ADHESIVE CANDIDATES 53 TO NOT OVERLAP WELDING POINTS 33

(c)

REMAIN-ING    55(53)    57(53)    RE-MAIN-ING    55(53)    57(53)    RE-MAIN-ING    55(53)    57(53)    43

33    ERASE    33    ERASE    33    ERASE    33

# FIG.7

START

| FREQUENCY RESPONSE ANALYSIS STEP | S1 |

| LOAD CONDITION DETERMINATION STEP | S3 |

| OPTIMIZATION ANALYSIS MODEL GENERATION STEP | S5 |

| OPTIMIZATION ANALYSIS CONDITION SETTING STEP | S7 |

| OPTIMIZATION ANALYSIS STEP | S9 |

END

# FIG.8

61

3 ⎯ DISPLAY DEVICE

5 ⎯ INPUT DEVICE

7 ⎯ MEMORY STORAGE

23 ⎯ AUTOMOTIVE BODY MODEL FILE

ARITHMETIC PROCESSING UNIT ⎯ 63

EIGENVALUE ANALYSIS UNIT ⎯ 65

LOAD CONDITION DETERMINATION UNIT ⎯ 15

OPTIMIZATION ANALYSIS MODEL GENERATION UNIT ⎯ 17

OPTIMIZATION ANALYSIS CONDITION SETTING UNIT ⎯ 19

OPTIMIZATION ANALYSIS UNIT ⎯ 21

WORKING DATA MEMORY ⎯ 9

# FIG.9

START

EIGENVALUE ANALYSIS STEP ⎯ S11

LOAD CONDITION DETERMINATION STEP ⎯ S3

OPTIMIZATION ANALYSIS MODEL GENERATION STEP ⎯ S5

OPTIMIZATION ANALYSIS CONDITION SETTING STEP ⎯ S7

OPTIMIZATION ANALYSIS STEP ⎯ S9

END

# FIG.10

(a) EIGENVALUE ANALYSIS: TORSIONAL MODE
(DISPLAY MAGNIFICATION: 200×)

(b) EIGENVALUE ANALYSIS: BENDING MODE
(DISPLAY MAGNIFICATION: 200×)

# FIG.11

LOAD CONDITION: REAR TORSION (TORSIONAL MODE)

(a) OPTIMIZED ADHESIVE PORTION: 79m | (b) OPTIMIZED ADHESIVE PORTION: 54m

# FIG.12

LOAD CONDITION: REAR TORSION (TORSIONAL MODE)

(a) OPTIMIZED ADHESIVE PORTION: 28m | (b) OPTIMIZED ADHESIVE PORTION: 14m

# FIG.13

LOAD CONDITION: REAR BENDING (BENDING MODE)

(a) OPTIMIZED ADHESIVE PORTION: 79m

(b) OPTIMIZED ADHESIVE PORTION: 54m

# FIG.14

LOAD CONDITION: REAR BENDING (BENDING MODE)

(a) OPTIMIZED ADHESIVE PORTION: 28m

(b) OPTIMIZED ADHESIVE PORTION: 14m

# FIG.15

LOAD CONDITION: REAR TORSION
(FREQUENCY RESPONSE ANALYSIS, TORSIONAL MODE)

FIRST PEAK (TORSIONAL MODE)
SECOND PEAK
(BENDING MODE)

base —14m —28m
—54m —79m —131m

ACCELERATION LEVEL OF VIBRATION
GENERATED IN OPTIMIZATION ANALYSIS
MODEL (dB)

FREQUENCY OF VIBRATION GENERATED IN OPTIMIZATION
ANALYSIS MODEL (Hz)

# FIG.16

LOAD CONDITION: REAR BENDING
(FREQUENCY RESPONSE ANALYSIS, BENDING MODE)

FIRST PEAK (TORSIONAL MODE)
SECOND PEAK
(BENDING MODE)

base —14m —28m
—54m —79m —131m

ACCELERATION LEVEL OF VIBRATION
GENERATED IN OPTIMIZATION ANALYSIS
MODEL (dB)

FREQUENCY OF VIBRATION GENERATED IN OPTIMIZATION
ANALYSIS MODEL (Hz)

# FIG.17

LOAD CONDITION: REAR TORSION
(FREQUENCY RESPONSE ANALYSIS, TORSIONAL MODE)

(a)

(b)

# FIG.18

LOAD CONDITION: REAR BENDING
(FREQUENCY RESPONSE ANALYSIS, BENDING MODE)

(a)

(b)

# FIG.19

LOAD CONDITION: REAR TORSION
(EIGENVALUE ANALYSIS, TORSIONAL MODE)

(a)

(b)

# FIG.20

LOAD CONDITION: REAR BENDING
(EIGENVALUE ANALYSIS, BENDING MODE)

(a)

APPLICATION LENGTH OF OPTIMIZED ADHESIVE
PORTION (m)

(b)

APPLICATION LENGTH OF OPTIMIZED ADHESIVE
PORTION (m)

## INTERNATIONAL SEARCH REPORT

| International application No. |
|---|
| PCT/JP2021/011351 |

**A. CLASSIFICATION OF SUBJECT MATTER**
Int. Cl. G01M7/02(2006.01)i, G06F30/15(2020.01)i, G06F30/20(2020.01)i
FI: G06F30/20, G06F30/15, G01M7/02 J

According to International Patent Classification (IPC) or to both national classification and IPC

**B. FIELDS SEARCHED**

Minimum documentation searched (classification system followed by classification symbols)
Int. Cl. G01M7/02, G06F30/15, G06F30/20

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)
IEEE Xplore; JSTPlus (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | WO 2019/155730 A1 (JFE STEEL CORP.) 15 August 2019, entire text, all drawings | 1-4 |
| A | JP 2016-71770 A (JFE STEEL CORP.) 09 May 2016, entire text, all drawings | 1-4 |
| A | JP 2005-250647 A (HITACHI, LTD.) 15 September 2005, entire text, all drawings | 1-4 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27.05.2021 | 08.06.2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/011351

| Patent Documents referred to in the Report | Publication Date | Patent Family | Publication Date |
|---|---|---|---|
| WO 2019/155730 A1 | 15.08.2019 | (Family: none) | |
| JP 2016-71770 A | 09.05.2016 | (Family: none) | |
| JP 2005-250647 A | 15.09.2005 | US 2005/0197822 A1 entire text, all drawings EP 1571597 A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010250818 A